# EUROPÄISCHE PATENTSCHRIFT

(11) **EP 0 523 440 B1**
(45) Veröffentlichungstag und Bekanntmachung des Hinweises auf die Patenterteilung: **31.05.1995**
(21) Anmeldenummer: 92110999.7
(22) Anmeldetag: 29.06.1992
(51) Int. Cl.: B60T 8/18, B60T 8/26

(54) **Druckwandler zur Regelung des Vorderachsbremsdruckes in pneumatischen Bremseinrichtungen für Fahrzeuge**
Valve for controlling of front axle pressure in air pressure brake systems for vehicles
Soupape pour contrôle de la pression du train avant pour systèmes de freinage pneumatiques pour véhicules

(30) Priorität: 15.07.1991 DE 4123424
(43) Veröffentlichungstag der Anmeldung: 20.01.1993
(73) Patentinhaber: KNORR-BREMSE Systeme für Nutzfahrzeuge GmbH, 80809 München (DE)
(72) Erfinder: Brungs, Siegfried, Dr., W-8000 München 50 (DE); Helf, Anton, D-8201 Prutting (DE)

(56) Entgegenhaltungen:
- EP-A- 0 097 761
- DE-A- 2 820 142
- US-A- 4 455 051
- US-A- 4 455 052
- Druckwandler DB 22 Knorr Bremse AG von 1981
- Relaisventil RE 11 Knorr Bremse AG von 1977

## Beschreibung

Die Erfindung betrifft einen Druckwandler nach dem Gattungsbegriff des Patentanspruches 1.

Aus dem Stand der Technik bekannte Druckwandler in pneumatischen Bremseinrichtungen (Konstruktionsblatt DB 2000-K14 der Knorr-Bremse GmbH vom November 1981) weisen infolge der gesetzlich geforderten Trennung der beiden Bremskreise, die eine Abdichtung nur jeweils gegen Atmosphäre zuläßt, mehrere Doppelabdichtungen auf; dies bedingt erhöhte Reibung und Hysterese. Zur Sicherung eines erhöhten Bremsdruckes bei Ausfall des zweiten Steuerkreises ist außerdem ein weiterer, federverspannter Steuerkolben erforderlich, was den baulichen Gesamtaufwand beträchtlich erhöht.

Davon ausgehend besteht die Aufgabe der Erfindung darin, einen Druckwandler der in Rede stehenden Art so auszugestalten, daß auf die herkömmlichen Doppelabdichtungen verzichtet werden kann und trotz Verwendung weniger Bauteile ein absolut zuverlässig wirkendes Ventilsystem gebildet ist, welches insbesondere mit einem geringen Ansprechdruck wirkt, einen vorteilhaft steilen Druckansprung zu Beginn der Druckbeaufschlagung aufweist und mit wirksamer Ausfallsicherung arbeitet.

Zur Lösung dieser Aufgabe dienen die Merkmale nach dem Kennzeichnungsteil des Patentanspruches 1.

Der Druckwandler ist von einfachem Aufbau, da der Relaiskolben und der als Zuschaltkolben wirkende Steuerkolben, jeweils vom ersten und zweiten Steuerdruck beaufschlagbar, ohne Verwendung von Doppelabdichtungen innerhalb des Druckwandlergehäuses geführt sind. Der Steuerkolben ist mittels einer Feder direkt am Relaiskolben bzw. dem das Ein- und Auslaßventil betätigenden Kolbenfortsatz abgestützt, was in Verbindung mit der erreichbaren Vergrößerung der Steuerflächen zu einem steilen, vorteilhaften Druckansprung beiträgt. Bei Druckausfall des zweiten Steuerkreises ist sichergestellt, daß die Ausfallsicherung in vollem Umfang zur Wirkung kommt, da sich an der radial inneren Ringfläche des Relaiskolbens maximaler Steuerdruck des ersten Steuerkreises aufbauen kann. Auch sind die Mittel zur Zuschaltung und Abschaltung der inneren Ringfläche des Relaiskolbens bei Verwendung des mit dem zuschaltbaren Steuerkolben in Verbindung befindlichen Rohrteils von einfacher, gleichzeitig sehr wirksamer Funktion, ohne daß Probleme der Dichtheit auftreten. Die Wirkfläche des Relaiskolbens ist durch Austausch von Dichtelementen in Ringflächen unterschiedlicher Flächengrößen aufteilbar, was eine Variation des Untersetzungsverhältnisses des Druckwandlers ermöglicht. Die sich durch das Ventilsystem erstreckende zentrale Entlüftung trägt zur erwünschten Absicherung der Kreise untereinander bei, d. h. der bauliche Aufwand von Doppeldichtungen entfällt vollständig.

Vorteilhafte Ausgestaltungen und Weiterbildungen sind in weiteren Patentansprüchen aufgeführt.
Die Erfindung ist nachfolgend anhand eines Ausführungsbeispiels unter Bezugnahme auf die beigefügte Zeichmung erläutert.
- Fig. 1: ist eine Schnittansicht eines Druckwandlers gemäß der Erfindung unter Darstellung seiner Zuordnung in einem Bremseines Fahrzeugs;
- Fig. 2: gibt den Kennlinienverlauf des ausgesteuerten Druckes p2 gegenüber den Steuerdrücken p41 und p42 wieder.

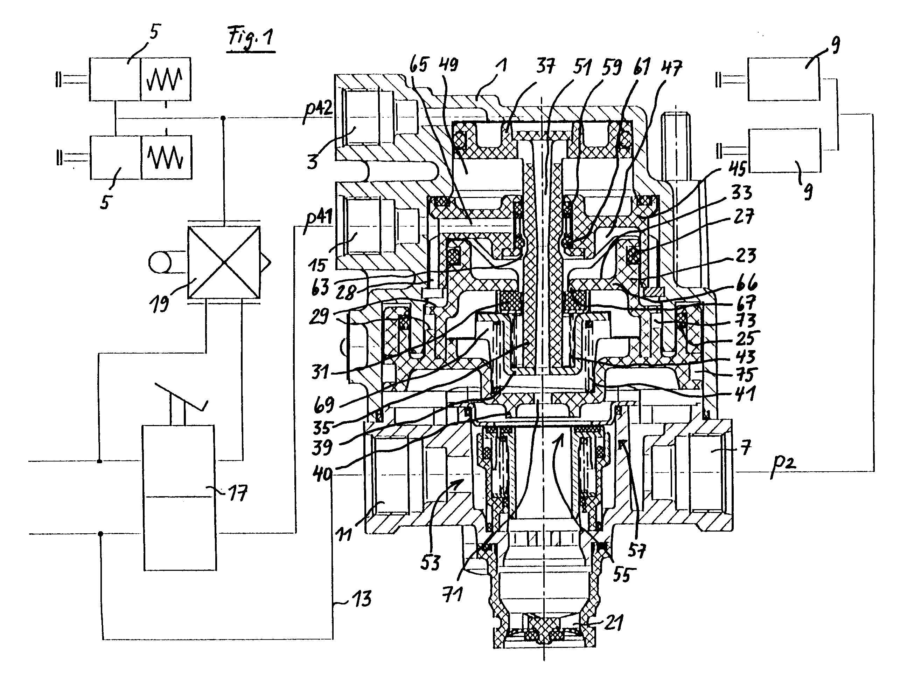

Das in Fig.1 der Zeichnung dargestellte Drucksteuerventil, auch als Druckwandler bezeichnet, weist an einem Gehäuse 1 einen Anschluß 3 auf, welcher mit den Bremszylindern 5 des Hinterachsbremskreises verbunden ist, ferner einen Anschluß 7, welcher mit den Bremszylindern 9 des Vorderachsbremskreises verbunden ist, und einen Anschluß 11, an welchen die Vorratsleitung 13 der Bremsanlage angeschlossen ist. An einem weiteren Anschluß 15 des Gehäuses 1 steht ein von einem Fußbremsventil 17 kommender erster Steuerdruck an, während am Vorgenannten Anschluß 3 der zweite Steuerdruck des Fußbremsventils einsteuerbar ist; hierbei entspricht der Steuerdruck dem Hinterachsbremsdruck, welcher in Abhängigkeit von der Beladung der Hinterachse mit Hilfe des dargestellten Bremskraftreglers 19 um ein bestimmtes Verhältnis niedriger einsteuerbar ist als der vom Fußbremsventil kommende erste Steuerdruck p41. An der Unterseite des Gehäuses 1 befindet sich eine Entlüftung 21.

Im Inneren des Gehäuses 1 befindet sich ein Relaiskolben 23, welcher eine von O-Ringen 25 und 27 begrenzte äußere Ringfläche 29 und eine von einem O-Ring 27 und einem inneren Dichtelement 31 begrenzte innere Ringfläche 33 aufweist. Das Dichtelement 31 dichtet sowohl gegenüber dem in der Darstellung darüber befindlichen Mittelteil des Relaiskolbens 23 als auch radial innenseitig gegenüber einem Rohrteil 35 eines Steuerkolbens 37 ab. Der Steuerkolben 37 ist im oberen Teil des Gehäuses 1 unter Abdichtung verschiebbar geführt und vom Steuerdruck p42 des Anschlusses 3 beaufschlagbar. Am unteren Ende des Rohrteils 35 ist ein Federteller 39 befestigt, an welchem eine sich an einem Fortsatz 40 des Relaiskolbens 23 abstützende Feder 41 als Rückstellelement anliegt. Das Rohrteil 35 ist bei Druckbeaufschlagung des Steuerkolbens 37 gegen die Kraft der Feder 41 nach unten gerichtet in Anlage mit dem Fortsatz 40 des Relaiskolbens 23 bewegbar; um das Dichtelement 31 in seiner Dichtlage zu halten, ist eine weitere Feder 43 vorgesehen, die sich an der Innenseite des Federtellers 39 und an der Unterseite des vorzugsweise in einer Schale gehalterten Dichtelements 31 abstützt.

Zwischen dem Steuerkolben 37 und dem Relaiskolben 23 befindet sich ein ortsfest fixierter, an seinem Innen- und Außenumfang abgedichteter Gehäuseeinsatz 45, durch welchen sich axialmittig unter Abdichtung das Rohrteil 35 erstreckt, derart, daß die von der Ringfläche 33 begrenzte Druckkammer 47 gegenüber dem ständig mit Außenluft in Verbindung stehenden Raum 49 unterhalb des Steuerkolbens 37 abgedichtet ist. Der Raum 49 ist über eine das Rohrteil 35 axial durchsetzende Bohrung 51 und das Innere des vom Relaiskolben betätigbaren Ein- Auslaßventils 53 mit der mit Außenluft in Verbindung stehenden Entlüftung 21 verbunden.

Das Ein- und Auslaßventil 53 ist in herkömmlicher Weise ausgebildet, wobei in der dargestellten Position des Druckwandlers das Auslaßventil 55 geöffnet, also der Anschluß 7 entlüftet ist, während das Einlaßventil 57 sich in geschlossener Position befindet. In dieser geschlossenen Position ist die Verbindung zwischen dem Anschluß 11 und dem zu den Bremszylindern 9 des Vorderachsbremskreises führenden Anschluß 7 gesperrt.

Wie vorstehend erwähnt, ist der Gehäuseeinsatz 45 gegenüber dem Außenumfang des Rohrteils 35 abgedichtet; dies geschieht mittels eines O-Rings 59. Gemäß Darstellung befindet sich unterhalb des O-Rings 59 ein weiterer O-Ring 61, welchem in der dargestellten Position des Druckwandlers unter Abstand eine Nut 63 am Außenumfang des Rohrteils 35 gegenüberliegt. Hierdurch ist eine Verbindung zwischen der Druckkammer 47 und einem den Gehäuseeinsatz 45 radial durchsetzenden Kanal 65 und somit eine Verbindung zum Anschluß 15 gegeben. Bewegt sich das Rohrteil 35 gemäß Darstellung nach unten gerichtet, so gelangt auch der zweite O-Ring 61 in dichtende Anlage mit dem Außenumfang des Rohrteils, so daß die vorgenannte Verbindung zwischen der Druckkammer 47 und dem Anschluß 15 unterbunden ist.

Dem Dichtelement 31 zugewandt ist an der Unterseite des Relaiskolbens, d.h. des inneren Ringteils 66 des Relaiskolbens, ein Ventilsitz 67 vorgesehen, an welchem das Dichtelement 31 in der Darstellung gemäß Zeichnung mit Hilfe der Feder 43 unter Abdichtung angedrückt ist. Hierdurch ist die Verbindung zwischen der Druckkammer 47 und der Kammer 69 unterhalb des Ringteils 66 unterbunden; die Kammer 69 ihrerseits ist ständig über die mittige Öffnung 71 an der Basis des Fortsatzes 40 mit dem Inneren des Ein- und Auslaßventils 53 und demnach mit der Entlüftung 21 verbunden. Bildet sich in der Druckkammer 47 ein zu hoher Druck auf, dann vermag dieser das Dichtelement 31 bei abgehobenem Federteller 39 gegen die Kraft der Feder 43 nach unten gerichtet zu verschieben, derart, daß ein Druckabbau in der Druckkammer 47 stattfinden kann.

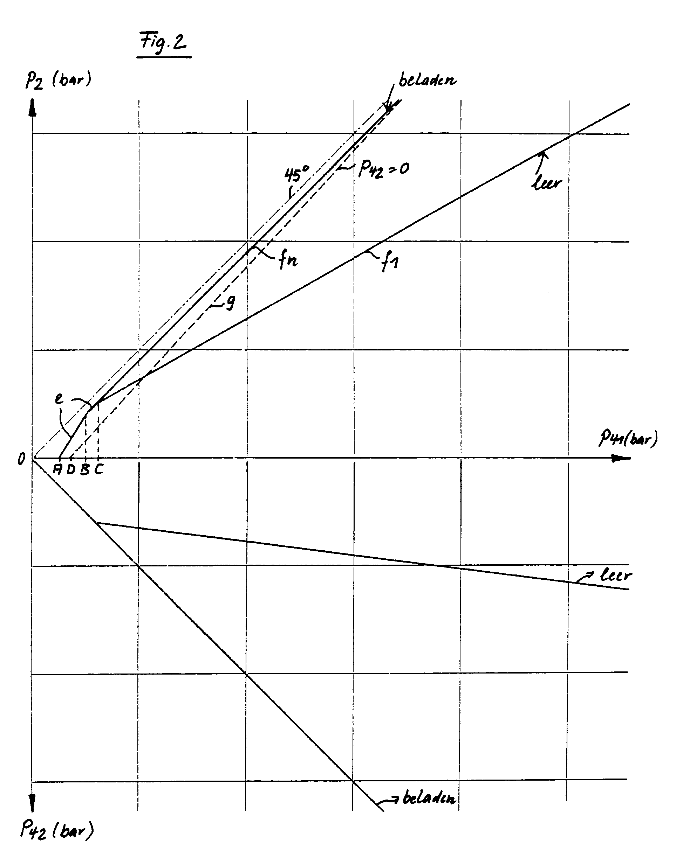

Die Wirkungsweise des Druckwandlers ist wie folgt:
Der Hinterachsbremsdruck (Steuerdruck p42) ist in Abhängigkeit von der Beladung der Hinterachse um ein bestimmtes Verhaltnis niedriger als der vom Fußbremsventil 17 kommende Steuerdruck p41. Ausgehend von der dargestellten Lage des Druckwandlers werden bei einer normalen Bremsung beide Steuerdrücke p41 und p42 gleichzeitig aufgebaut. Der Steuerdruck p41 beaufschlagt zunächst durch den Kanal 28 die Ringfläche 29 des Relaiskolbens 23 und weiterhin durch den Kanal 65 und die offene Nut 63 die innere Ringfläche 33, welche zwischen dem O-Ring 27 und dem Dichtelement 31 besteht. Da auf diese Weise die gesamte Primärfläche des Relaiskolbers 23 mit dem Steuerdruck p41 beaufschlagbar wird, erfolgt in dieser Phase eine Druckaussteuerung p2 entsprechend Kennlinie e in Fig.2. Die Kennlinie e beginnt am Punkt A, dem Punkt des Ansprechdrucks. Die Steigung der Kennlinie e hängt in diesem Bereich im wesentlichen von den existierenden Flächenverhältnissen am Relaiskolben ab. Der Steuerdruck p42 der Hinterachse beaufschlagt gleichzeitig den Steuerkolben 37 und bewegt diesen ab einem bestimmten Druck gemäß Darstellung nach untern gerichtet; der O-Ring 61 dichtet nunmehr gegenüber dem Außenumfang des Rohrteils 35, d.h. die Verbindung zwischen dem Anschluß 15 und der Druckkammer 47 wird unterbunden. Gleichzeitig schlägt der Federteller 39 am Relaiskolben an. Inabhängigkeit von der Höhe des Druckreduzierverhältnisses p42 : p41 und dem Verhältnis der einander gegenüberstehenden Kolbenflächen im Relaisventil erfolgt am Anschluß 7 ein Druckaufbau entsprechend den Kennlinien f1, f2....fn wobei die Kennlinie f1 dem Leer-Zustand des Fahrzeugs entspricht. Der Relaiskolben 23 ist zum Zwecke der Aussteuerung des Druckes f in herkömmlicher Weise wirksam, d.h. der Relaiskolben betätigt das Ein- und Auslaßventil 53, derart, daß bei geöffnetem Einlaßventil 57 und geschlossenem Auslaßventil 55 eine Verbindung zwischen dem Vorratsdruck führenden Anschluß 11 und und dem Anschluß 7 hergestellt ist, während bei Druckentlastung des Relaiskolbens die in Fig. 1 wiedergegebene Position vorliegt, bei welcher das Einlaßventil 57 geschlossen ist, während das Auslaßventil 55 die Verbindung zwischen dem Anschluß 7 und der Entlüftung 21 herstellt. In Fig.2 der Zeichnung, in welcher sowohl der ausgesteuerte Druck p2 als auch der Druckverlauf des Steuerdruckes p42 gegenüber dem Steuerdruck p41 wiedergegeben ist, gibt der Punkt B nach einem ersten Ansprung den Zeitpunkt des Schließens des Rohrteils 35 gegenüber dem O-Ring 61 wieder, wobei der Verlauf des ausgesteuerten Druckes nachfolgend im wesentlichen entlang einer 45°-Linie bis zum Punkt C besteht, wo der Anlegedruck erreicht ist. Beginnend mit dem sogenannten Anlegedruck des Bremskraftreglers 19 wird die lastabhängige Beeinflussung durch den Steuerdruck p 42 wirksam, derart, daß die Kennlinie f entsprechend dem vorgenannten Beladungszustand des Fahrzeugs zwischen fl und fn verläuft. Wird am Anschluß 3, z. B. wegen eines Leitungsbruches, kein Steuerdruck p42 aufgebaut, dann wird ein Bremsdruck p2 entsprechend Kennlinie g nach Fig. 2 ausgesteuert.

Bei dem Druckwandler nach Fig. 1 bewegt sich der Federteller 39 bei Beaufschlagung des Rohrteils 35 in vom Dichtelement 31 abgewandter Richtung, d. h. abwärts gerichtet, wobei das Dichtelement 31 durch die Wirkung der Feder 43 in Anlage mit der Unterseite des Ringteils 66 bleibt. Bei einem unzulässig hohen Druck in der Druckkammer 47, z.B. bedingt durch den Ausfall des O-Rings 61, wird das Dichtelement 31 gegen die Kraft der Feder 43 verschoben. Das Dichtelement 31 öffnet hierdurch die Verbindung in die Kammer 69, welche durch die Öffnung 71 ständig mit Außenluft in Verbindung steht. Es erfolgt ein Druckabbau auf einen niedrigen Wert von z.B. 0,5 bar.

Bei Ausfall des Steuerdruckes p42 bewirkt die gegenüber der Feder 43 sehr viel höhere Kraft der Feder 41, daß sich das Dichtelement 31 vom zugewandten Ventilsitz 67 an der Unterseite des Ringteils 66 nicht abheben kann, mit der Folge, daß sich in der Druckkammer 47 der maximale Steuerdruck p41-max aufbauen kann und die Funktion "Ausfallsicherung" in voller Wirkung gegeben ist. Diese Funktion ist durch die strichlinierte Kennlinie g in Fig.2 der Zeichnung dargestellt. Es ist erkennbar, daß der Ansprechdruck, also der Beginn der Aussteuerung des Druckes p2 gemäß Position D (Fig.2) größer ist, weil größere Reibungen an den Kolben im Vergleich zu den Druckbeaufschlagungsflächen existieren. Die Steilheit der Kennlinie g ist durch die Flächenverhältnisse vorgegeben.

Der sog. Ansprechdruck des Ventils nach Fig.1 ist sehr klein (Punkt A in Fig.2), da die jeder 41 zugleich Rückholfeder für den Steuerkolben 37 ist und bis zum Schließen des Dichtelements 31 die Druckbeaufschlagungsfläche des Steuerkolbens 37 und die innere und die äußere Ringfläche 33 bzw. 29 des Relaiskolbens insgesamt als Steuerflächen wirksam sind. Die Vergrößerung der Steuerflächen bewirkt außerdem den aus Fig.2 ersichtlichen vorteilhaften, steileren Druckansprung gemäß Kennlinie e zwischen den Punkten A und B.

Wie die Anordnung nach Fig.1 erkennen läßt, können die Ringflächen des Relaiskolbens unterschiedlich groß dimensioniert werden, wodurch die Kennlinie des ausgesteuerten Druckes p2 modifizierbar ist; es sind in der Darstellung nach Fig.1 Leerstellen 73 und 75 wiedergegeben, welche wahlweise zum Einsetzen von O-Ringen vorgesehen sind, so daß durch Versetzen der O-Ringe 25 und 27 größere Ring-Wirkflächen am Relaiskolben ausgebildet werden können.

### Bezugszeichenliste

- 1: Gehäuse
- 3: Anschluß
- 5: Bremszylinder
- 7: Anschluß
- 9: Bremszylinder
- 11: Anschluß
- 13: Vorratsleitung
- 15: Anschluß
- 17: Fußbremsventil
- 19: Bremskraftregler
- 21: Entlüftung
- 23: Relaiskolben
- 25: O-Ring
- 27: O-Ring
- 28: Kanal
- 29: Ringfläche
- 31: Dichtelement
- 33: Ringfläche
- 35: Rohrteil
- 37: Steuerkolben
- 39: Federteller
- 40: Fortsatz
- 41: Feder
- 43: Feder
- 45: Gehäuseeinsatz
- 47: Druckkammer
- 49: Raum
- 51: Bohrung
- 53: Ein- und Auslaßventil
- 55: Auslaßventil
- 57: Einlaßventil
- 59: O-Ring
- 61: O-Ring
- 63: Nut
- 65: Kanal
- 66: Ringteil
- 67: Ventilsitz
- 69: Kammer
- 71: Öffnung
- 73: Leerstelle
- 75: Leerstelle

## Patentansprüche

1. Druckwandler zur Regelung des Vorderachsbremsdruckes in pneumatischen Bremseinrichtungen für Fahrzeuge mit lastabhängig geregeltem Hinterachsbremsdruck, mit einem im Gehäuse (1) des Druckwandlers von einem ersten Steuerdruck beaufschlagbaren Kolben, welcher mit einem vom lastabhängig geregelten Druck des Hinterachsbremskreises als zweitem Steuerdruck beaufschlagbaren Steuerkolben (37) ein Ein- und Auslaßventil (53) zur Druckversorgung des Vorderachsbremskreises betätigt, dadurch gekennzeichnet, daß der durch den ersten Steuerdruck (p41) beaufschlagbare Kolben als Relaiskolben (23) eines Relaisventils ausgebildet ist, dessen Ein- und Auslaßventil (53) die Bremszylinder (9) des Vorderachsbremskreises mit Vorrat (11) oder mit Außenluft verbindet, wobei die vom ersten Steuerdruck direkt beaufschlagbare Wirkfläche (29;33) des Relaiskolbens (23) in eine radial äußere Ringfläche (29) und eine radial innere Ringfläche (33) unterteilt ist und eine der Ringflächen durch den vom zweiten Steuerdruck (p42) beaufschlagbaren Steuerkolben (37) gegenüber dem ersten Steuerdruck (p41) absperrbar ist.

2. Druckwandler nach Anspruch 1, gekennzeichnet durch folgende Merkmale:
a) der vom lastabhängig geregelten Druck des Hinterachsbremskreises beaufschlagbare Steuerkolben (37) ist mit einem Rohrteil (35) verbunden, welches sich axialmittig durch den Relaiskolben (23) erstreckt;
b) das Ende des Rohrteils (35) stützt sich mittels einer Feder (41) an einem Fortsatz (40) des Relaiskolbens ab; und
c) am Außenumfang des Rohrteils (35) als auch am Innenumfang des vom Rohrteil durchsetzten Relaiskolbens sind Ventilmittel vorgesehen, welche nach Maßgabe der Axialposition des Rohrteils (35) die innere Ringfläche (33) des Relaiskolbens (23) gegenüber dem den ersten Steuerdruck (p41) führenden Anschluß (15) sperren oder öffnen.

3. Druckwandler nach Anspruch 2, gekennzeichnet durch folgende Merkmale:
a) zwischen dem Steuerkolben (37) und dem Relaiskolben (23) befindet sich ein ortsfester Gehäuseeinsatz (45), welcher gegenüber dem Innenumfang des Gehäuses (1) als auch gegenüber dem Außenumfang des Rohrteils (35) abgedichtet ist;
b) der Gehäuseeinsatz ist in Radialrichtung von wenigstens einem mit dem Anschluß (15) verbundenen Kanal (65) durchsetzt;
c) der Kanal (65) mündet radial innenseitig am Außenumfang des Rohrteils (35), wobei die Verbindung zwischen der Mündung des Kanals und der inneren Ringfläche (33) des Relaiskolbens von einem am Innenumfang des Gehäuseeinsatzes (45) angeordneten O-Ring (61) überwacht ist; und
d) in Löseposition des Relaisventils ist die am Außenumfang des Rohrteils ausgebildete Nut (63) gegenüber dem O-Ring (61) ausgerichtet, derart, daß die Verbindung zwischen dem Anschluß (15) und der die innere Ringfläche (33) begrenzenden Druckkammer (47) hergestellt ist, während bei Druckbeaufschlagung des Steuerkolbens (37) und Relativverschiebung desselben der O-Ring unter Sperrung der Druckkammer (47) an dem Außenumfang des Rohrteils (35) dichtet.

4. Druckwandler nach einem der vorangehenden Ansprüche, gekennzeichnet durch folgende Merkmale:
a) der Innenumfang des Relaiskolbens (23) ist mittels eines Dichtelements (31) gegenüber dem Außenumfang des Rohrteils (35) abgedichtet;
b) das Dichtelement (31) ist unter Einwirkung einer Feder (43) gegenüber einem am Innenumfang des Relaiskolbens an diesem ausgebildeten Ventilsitz (67) verspannt; und
c) die Feder (43) ist an ihrem entgegengesetzten Ende am Federteller (39) des Rohrteils abgestützt.

5. Druckwandler nach Anspruch 4, gekennzeichnet durch folgende Merkmale:
a) der Federteller (39) ist in der Lösestellung des Relaisventils an der Unterseite des Dichtelements formschlüssig angelegt; und
b) bei Betätigung des Steuerkolbens (37) entfernt sich der Federteller vom Dichtelement, derart, daß das Dichtelement bei Erreichen eines Überdrucks in der Druckkammer (47) gegen die Kraft der Feder (43) von seinem Ventilsitz abhebbar ist und der Druck in der Druckkammer in eine mit Außenluft in Verbindung stehende Kammer (69) entweicht.

6. Druckwandler nach einem der vorgehenden Ansprüche, dadurch gekennzeichnet, daß die Unterteilung der Wirkfläche des Relaiskolbens in innere und äußere Ringfläche variabel gestaltbar ist.

7. Druckwandler nach Anspruch 6, dadurch gekennzeichnet, daß die Flächenverhältnisse von innerer und äußerer Ringfläche durch austauschbare Dichtelemente variabel gestaltbar sind.

## Claims

1. Pressure transducer for controlling the front axle brake pressure in pneumatic brake systems for vehicles which have a load-controlled rear axle brake pressure, having a piston in the housing (1) of the pressure transducer to which a first control pressure can be applied, and which, together with a control piston (37), to which the load-controlled pressure of the rear axle brake circuit can be applied as a second control pressure, activates an intake-discharge valve (53) for the pressure supply of the front axle brake circuit, characterised in that the piston to which the first control pressure (p41) can be applied is formed as a relay piston (23) of a relay valve, the intake-discharge valve (53) of which links the brake cylinders (9) of the front axle brake circuit with a supply (11) or with outside air, wherein the effective surface (29; 33) of the relay piston (23), to which effective surface the first control pressure can be directly applied, is divided into a radially external ring surface (29) and a radially internal ring surface (33), and one of the ring surfaces can be closed off in respect of the first control pressure (p41) by the control piston (37) to which the second control pressure (p42) an be applied.

2. Pressure transducer according to claim 1, characterised by the following features:
a) the control piston (37) to which the load-controlled pressure of the rear axle brake circuit can be applied is linked to a tube piece (35), which extends through the relay piston (23) in such a way that it is axially central thereto;
b) the end of the tube piece (35) is supported on an extension (40) of the relay piston by means of a spring (41); and
c) provided on the outer perimeter of the tube piece (35), as well as on the inner perimeter of the relay piston which is penetrated by the tube piece, there are valve devices, which, in accordance with the axial position of the tube piece (35), shut off or open the internal ring surface (33) of the relay piston (23) in respect of the connection (15) which directs the first control pressure (p41).

3. Pressure transducer according to claim 2, characterised by the following features:
a) between the control piston (37) and the relay piston (23) there is a fixed housing-insert (45) which is sealed off in respect of the inner perimeter of the housing (1) as well as in respect of the outer perimeter of the tube piece (35);
b) the housing-insert is penetrated in the radial direction by at least one channel (65) linked to the connection (15);
c) the channel (65) ends radially on the inside at the outer perimeter of the tube piece (35), with the link between the mouth of the channel and the internal ring surface (33) of the relay piston being controlled by an O-ring (61) which is arranged on the inner perimeter of the housing-insert (45); and
d) in the release position of the relay valve, the groove (63) formed on the outer perimeter of the tube piece is aligned in respect of the O-ring (61) in such a way that the link is produced between the connection (15) and the pressure chamber (47) which delimits the internal ring surface (33), while when pressure is applied to the control piston (37) and there is relative displacement thereof, the O-ring, forms a seal at the outer perimeter of the tube piece (35), closing the pressure chamber (47).

4. Pressure transducer according to one of the preceding claims, characterised by the following features:
a) the inner perimeter of the relay piston (23) is sealed off in respect of the outer perimeter of the tube piece (35) by means of a sealing element (31);
b) the sealing element (31) is braced by the effect of a spring (43) against a valve seat (67) which is formed on the relay piston on the inner perimeter thereof; and
c) the spring (43) is supported at its opposite end on the spring plate (39) of the tube piece.

5. Pressure transducer according to claim 4, characterised by the following features:
a) in the release position of the relay valve, the spring plate (39) is laid against the underside of the sealing element in a form-fitting manner; and
b) in the event of the control piston (37) being activated, the spring plate is lifted from the sealing element in such a way that in the event of an excess pressure being reached in the pressure chamber (47), the sealing element can be lifted from its valve seat against the force of the spring (43) and the pressure in the pressure chamber escapes into a chamber (69) which is linked to outside air.

6. Pressure transducer according to one of the preceding claims, characterised in that the division of the effective surface of the relay piston into internal and external ring surfaces can be formed in a variable manner.

7. Pressure transducer according to claim 6, characterised in that the surface relationships between internal and external ring surfaces can be formed in a variable manner by exchangeable sealing elements.

## Revendications

1. Convertisseur de pression pour régler la pression de freinage de l'essieu avant dans des dispositifs de freinage de pneumatiques pour des véhicules, dans lesquels la pression de freinage de l'essieu arrière est réglée en fonction de la charge, comportant un piston, qui est chargé par une première pression de commande dans le carter (1) du convertisseur de pression et qui actionne, au moyen d'un piston de commande (37) pouvant être chargé par la pression réglée en fonction de la charge du circuit de freinage de l'essieu arrière, réglé en fonction de la charge et constituant une seconde pression de commande, une soupape d'admission et d'évacuation (53) pour l'alimentation en pression du circuit de freinage de l'essieu avant, caractérisé par le fait que le piston, qui peut être chargé par la première pression de commande (p41), est agencé sous la forme d'un piston-relais (23) d'une soupape relais, que la soupape d'admission et d'évacuation (53) de ce piston relie le cylindre de frein (9) du circuit de freinage de l'essieu avant au réservoir (11) ou à l'atmosphère, auquel cas la surface active (29;33) du piston-relais (23), qui peut être chargée, directement par la première pression de commande, est subdivisée en une surface annulaire (29), radialement extérieure, et une surface annulaire (33), radialement intérieure, et l'une des surfaces annulaires peut être bloquée par rapport à la première pression de commande (p41), Par le piston de commande (37) qui est chargé par la seconde pression de commande (p42).

2. Convertisseur de pression suivant la revendication 1, caractérisé par les particularités suivantes :
a) le piston de commande (37), qui peut être chargé par la pression, réglée en fonction de la charge, du circuit de freinage de l'essieu arrière, est relié à une partie tubulaire (35), qui traverse, en position axiale centrée, le piston-relais (23);
b) l'extrémité de la partie tubulaire (35) prend appui au moyen d'un ressort (41) sur un prolongement (40) du piston-relais; et
c) sur la périphérie extérieure de la partie tubulaire (35) et sur le pourtour intérieur du piston-relais traversé par la partie tubulaire sont prévus des moyens formant soupapes, qui, en fonction de la position axiale de la partie tubulaire (35), bloquent ou ouvrent la surface intérieure annulaire (33) par rapport au raccord (15) véhiculant la première pression de commande (p41).

3. Convertisseur de pression suivant la revendication 2, caractérisé par les particularités suivantes :
a) entre le piston de commande (37) et le piston-relais (23) est situé un insert de boîtier fixe (45), qui est fermé de façon étanche par rapport à la périphérie intérieure du carter (1) ainsi que par rapport à la périphérie extérieure de la partie tubulaire (35);
b) l'insert de carter est traversé, dans une direction radiale, par au moins un canal (65) relié au raccord (15);
c) le canal (65) débouche radialement sur le côté intérieur au niveau de la périphérie extérieure de la partie tubulaire (35), la liaison entre l'embouchure du canal et la surface annulaire intérieure (33) du piston-relais étant contrôlée bar un joint torique (61) disposé sur la périphérie intérieure de l'insert de carter (45); et
d) dans la position de libération de la soupape-relais, la gorge (63) ménagée dans la périphérie extérieure de la partie tubulaire, est orientée par rapport au joint torique (61) de telle sorte que la liaison est établie entre le raccord (15) et la chambre de pression (47) qui limite la surface annulaire intérieure (33), tandis que dans le cas d'une charge en pression du piston de commande (37) et d'un déplacement relatif de ce piston, le joint torique s'applique d'une manière étanche contre la périphérie extérieure de la partie tubulaire (35), en fermant la chambre de pression (47).

4. Convertisseur de pression suivant l'une des revendications précédentes, caractérisé par les particularités suivantes :
a) la périphérie intérieure du piston-relais (23) est fermée de façon étanche au moyen d'un élément d'étanchéité (31), par rapport à la périphérie extérieure de la partie tubulaire (35);
b) l'élément d'étanchéité (31) est serré, sous l'action d'un ressort (43), contre un siège de soupape (67) formé sur le piston-relais, au niveau de la périphérie intérieure de ce piston; et
c) le ressort (43) prend appui, au niveau de son extrémité opposée, sur la coupelle (39) pour ressort de la partie tubulaire.

5. Convertisseur de pression suivant la revendication 4, caractérisé par les particularités suivantes :
a) la coupelle (39) pour ressort est appliquée contre la face inférieure de l'élément d'étanchéité selon une liaison par formes complémentaires, lorsque la soupape-relais est dans sa position libérée; et
b) lors de l'actionnement du piston de commande (34), la coupelle pour ressort s'écarte de l'élément d'étanchéité de telle sorte que lorsqu'une surpression est atteinte dans la chambre de pression (47), l'élément d'étanchéité peut être écarté de son siège de soupape à l'encontre de la force du ressort (43) et que la pression dans la chambre de pression se détend dans une chambre (69) qui est reliée à l'atmosphère.

6. Convertisseur de pression suivant l'une des revendications précédentes, caractérisé par le fait que la subdivision de la surface active du piston-relais en une surface annulaire intérieure et une surface annulaire extérieure peut être réalisée avec une configuration variable.

7. Convertisseur de pression suivant la revendication 6, caractérisé par le fait que les rapports de la surface annulaire intérieure à la surface annulaire extérieure peuvent être réglés de façon variable grâce à des éléments d'étanchéité remplaçables.
